# EUROPEAN PATENT SPECIFICATION

(11) **EP 3 490 077 B1**
(45) Date of publication and mention of the grant of the patent: **17.02.2021**
(21) Application number: 17203074.4
(22) Date of filing: 22.11.2017
(51) Int. Cl.: H01R 13/52, H01R 13/641, H01R 43/00, B29C 45/00, H01R 13/506

(54) **SEALED ELECTRICAL WIRE HARNESS AND MANUFACTURING METHOD THEREOF**
ABGEDICHTETER ELEKTRISCHER KABELBAUM UND HERSTELLUNGSVERFAHREN DAFÜR
HARNAIS DE FIL ÉLECTRIQUE ÉTANCHE ET PROCÉDÉ DE FABRICATION ASSOCIÉ

(43) Date of publication of application: 29.05.2019
(73) Proprietor: Aptiv Technologies Limited, St. Michael (BB)
(72) Inventor: SIWEK, Bartlomiej, 30-348 Krakow (PL); REGNIER, Vincent, 91080 Spardorf (DE); SCHOENENBERG, Florian, 90480 Nürnberg (DE); MILKOWSKI, Ryszard, 31-317 Krakow (PL)
(74) Representative: Mader, Joachim

(56) References cited:
- EP-A1- 3 232 517
- EP-A2- 1 806 813
- WO-A1-89/04072
- DE-A1- 19 816 216

## Description

### TECHNICAL FIELD OF INVENTION

The invention relates to a sealed electrical wire harness for connecting safety devices in vehicles, a connector housing for the sealed electrical wire harness and a method to assemble the sealed electrical wire harness.

### BACKGROUND OF INVENTION

In recent years, vehicles have been equipped with numerous safety devices. Additional to the well-known airbag and safety belt devices, new devises for e.g. cutting battery cables or devises for lifting the motor hood of the vehicle in case of an accident, are implemented. This devises work employ explosive loads that are triggered by electrical signals coming from the body computer of the vehicle in case of an accident. The electrical connectors that are used for connecting the safety devices, are known in the art as SQUIB connectors. These connectors have to fulfill additional, increased safety criteria. In the past safety devices were usually installed only in the passenger compartment. The electrical connectors were unsealed, because the requirements for the passenger compartment does not requested sealed connectors. The new additional safety devices are now placed also in wet areas outside the passenger compartment. This requires electrical harnesses with connectors that are, additional to the mentioned requirements, sealed against humidity and dirt.

An approach to provide an electrical harness having a sealed SQUIB connector, is to provide a watertight cover around an existing SQUIB connector. But this cover increased the overall size of the connector, which causes problems in the narrow spaces where the connector has to be connected. Furthermore, the cover has to have a sufficient thickness to withstand damages while assembling the connector to the counter connector at the carmakers thereby still keep its sealing ability. Furthermore, this increasing the size of the connector also as the weight of the connector and generate additional costs for the cover and assembling the cover.

Reference document EP 3 232 517 A1 relates to an electrical connector comprising a connector position assurance device, in particular for a safety restraint system.

Reference document DE 198 16 216 A1 relates to a sealed electrical connector and a connection system consisting of the electrical connector and an electrical device.

Reference document WO 89/04072 A1 relates to electrical connectors of the type used to form a sealed electrical interconnection and more specifically to electrical connectors having a dual molded insulated housing consisting of a rigid portion and a deformable sealing portion.

Reference document EP 1806 813 A2 relates to electrical connectors, and more particularly to an electrical socket connector having a connector body which is co-molded with its cable and peripheral seals.

Thus, there is the need in the art to provide a sealed electrical wire harness for connecting safety devices in vehicles that overcomes the above-mentioned shortcomings of the prior art and provide a sealed electrical wire harness comprising an electrical connector that is small in size, light in weight and cheap to manufacture.

### SUMMARY OF THE INVENTION

A sealed electrical wire harness according claim 1 and the method to manufacture the sealed electrical wire harness according claim 10 solve these and other objects, which become apparent upon reading the following description.

The present application relates to a sealed electrical wire harness for connecting safety devices in vehicles, comprising an electrical connector, comprising a connector housing, having a wire inlet portion, a connector position assurance holder portion and an interface portion. At least one electrical terminal is located and electrically connected to an electrical wire inside an internal cavity that is located central inside the connector housing. The internal cavity extends into the interface portion. The electrical wire extends to outside the connector housing passing the wire inlet portion, that is located between the internal cavity and the outside of the connector housing. A flexible sealing member, adapted to seal the internal cavity, when the electrical connector is electrically connected to a counter connector and when a connector position assurance device is activated in the connector position assurance holder portion to mechanically lock the electrical connector to the counter connector. The flexible sealing member is made in one piece.

The disclosed invention provides a sealed electrical wire harness that is usable to connect safety devices of vehicles that are located outside the dry passenger compartment. The seal, located in the connector housing, for sealing the sensitive contact area against humidity and dirt coming from outside, is not premanufactured and inserted in the connector housing as usually done in the art. In contrary the connector housing of the inventive sealed electrical wire harness gets the flexible sealing member when all parts are preassembled. The flexible sealing member is defined inside the connector housing, the connector position assurance holder portion and the interface portion after the fluid sealing material is pressed in an injection molding tool wherein the connector housing is received. An inlet opening in the connector housing is internal connected to channels that distribute the injected sealing material to the portions where sealing is requested. Due to the portions are interconnected by fluid connection to the inlet opening, the fluid sealing material can flow through the channel, pushed by the injection machine. After finishing the injection molding process all portions are provided with the correct amount of sealing material. To become solid, the sealing material has to cool down. After cooling down the flexible sealing member is one part.

The present application discloses also a method to manufacture a sealed electrical wire harness as described above. The method comprises the steps: Providing a connector housing, with an in the connector housing inserted electrical terminal with attached and electrically connected electrical wire, sealing material and a tooled injecting molding machine. The injecting molding tool comprises a heating protrusion adapted to extend, through an opening in the connector housing, to inside the connector housing. Inserting the equipped connector housing into the injecting molding tool. Closing the injecting molding tool thereby covering the connector housing tightly, whereby the heating protrusion protrudes inside the connector housing. Filling the sealing material into the connector housing, thereby distributing the sealing material inside the connector housing, to the wire inlet portion, connector position assurance holder portion and the interface portion, whereby the heating protrusion is flowed by the sealing material. Removing the sealed electrical wire harness from the injecting molding tool.

The disclosed inventive method provides additional energy (heating) into the sealing material while distributing the sealing material to the requested portions. This improves the fluidity of the sealing material. A better fluidity of the sealing material supports a faster production process and better quality of the final seal.

According to a preferred embodiment, the flexible sealing member is made of silicone or materials comprising silicone. Silicone is a well discovered material with very good sealing properties. Silicone can be used in a fluid state and then transformed into a solid-state. In this application the silicone is injection molded in fluid state, having a high temperature. After cooling the flexible sealing member as a solid body. The flexible sealing member could also be made of a thermoplastic elastomer (TPE).

According to the invention, the interface portion comprises a sleeve shaped interface shroud extending from the connector housing. A part of the flexible sealing member is arranged on an interface inner surface of the sleeve shaped interface shroud. To seal the interface, portion a ring-shaped structure this provided that surrounds a portion of a counter connector when plugged together, thereby sealing the space between the interface inner surface and the portion of a counter connector. The flexible sealing member can extend from the interface inner surface in alternating distance, thereby forming a wave profile. The wave profile can improve handling while connecting and the sealing along the lifetime.

According to the invention, the connector position assurance holder portion comprises a sleeve shaped connector position assurance holder shroud extending from the connector housing, wherein a part of the flexible sealing member is arranged on an inner connector position assurance holder surface of the sleeve shaped connector position assurance holder shroud. To seal the connector position assurance holder portion a ring-shaped structure this provided that surrounds a portion of a connector position assurance device when plugged together, thereby sealing the space between the sleeve shaped connector position assurance holder shroud and the portion of the connector position assurance device. The flexible sealing member can extend from the sleeve shaped connector position assurance holder shroud in alternating distance, thereby forming a wave profile. The wave profile can improve handling while connecting and the sealing along the lifetime.

According to the invention, the wire inlet portion comprises an inlet cavity located inside the connector housing, wherein a part of the flexible sealing member fills the inlet cavity, thereby sealingly surrounding a portion of the electrical wire passing the inlet cavity. The electrical wire is surrounded from a massive seal portion, while extending from the internal cavity, to outside the connector housing. Because the cavity has a certain length along the way of the wire, a certain length of the wire can be provided with feeling material. Because the injection molding is conducted with high temperature the outer insulation of the wire can glue to the seal material after cooling down. This provides very effective sealing.

According to the invention, the connector housing comprises at least one channel that connects the interface portion, the connector position assurance holder portion and the wire inlet portion, wherein a part of the flexible sealing member extends through the at least one channel. Providing the channel inside the connector housing reduces the overall size of the connector compared to prior art. The seal is also protected from mechanical influences.

According to the invention, the connector housing comprises a first housing part and a second housing part. The first housing part has at least one arm with a hook shaped end, comprising a first surface facing towards the first housing part and wherein the second housing part has at least one edge comprising a second surface facing the second housing part. The first surface is arranged opposite the second surface when the first housing part and the second housing part are assembled. A part of the flexible sealing member is arranged in between the first surface and the second surface. The first housing part and the second housing part can be assembled by a snap fit connection as known in the art. This connection provides a fast and easy connection method. But also alternative connecting methods as screwing or welding can be used to connect the first housing part and the second housing part. Because the flexible sealing member is also present between the first surface and the second surface there is no play between the first housing part and the second housing part that prevent problems when vibration is applied to the connector.

In a preferred embodiment, a part of the at least one channel is defined by the first surface and the second surface. Due to the first surface and the second surface are spaced apart while the injection molding process the space in between can be used as channel for the sealing material.

Preferably, the first housing part comprises at least one wall extending perpendicular from a first inner surface towards a second inner surface of the second housing part, thereby touching the second inner surface. The wall furthermore extends between the first inner surface and the second inner surface, thereby defining separate spaces inside the connector housing. The inner surfaces of the housing part are substantially parallel with space in between. Protrusions or walls, that starts perpendicular from one inner surface, contact, if extend far enough, the opposite inner surface. The walls extend parallel to the inner surfaces thereby dividing the space between the inner surfaces. Dependent on the routing of the walls, the space between the surfaces can be divided into separate cavities...

Advantageously, an at least one wall defining a part of the internal cavity. A wall that surrounds a portion in the center of the connector housing, where the terminals are located, defines in addition with the inner surfaces, a protective cavity. The terminals are protected first from the cover of the connector housing and in addition from the wall inside the connector housing.

Preferably, the at least one wall defining a part of the channel. The space between the internal cavity and the remaining inner space of the connector housing can be used as channel for the seal material.

In a preferred embodiment, the connector housing comprises at least one opening connecting the at least one channel to outside, wherein a part of the flexible sealing member is present in the opening and flush with the housing outer surface of the connector housing. The part of the flexible sealing member that is visible in the opening gives an indication about the quality of the flexible sealing member.

Advantageously, the flexible sealing member that is present in the opening comprises an indentation, wherein the indentation extends inwards the connector housing. The indentation in the flexible sealing member gives an indication about the quality of the flexible sealing member in deeper layers.

Preferred, is a connector housing for a sealed electrical wire harness, wherein the connector housing comprises a first housing part and a second housing part adapted to define the connector housing. The first housing part has at least one arm with a hook shaped end, comprising a first surface facing the first housing part and wherein the second housing part has at least one edge comprising a second surface facing the second housing part. The first surface is arranged opposite the second surface when the first housing part and the second housing part are in an assembled state. The hook shaped end is adapted to keep the first surface spaced apart from the second surface when the first housing part and the second housing part are hold against each other. The first housing part and the second housing part can be assembled by a snap fit connection as known in the art. This connection provides a fast and easy connection method. The at least one arm has a length that is slightly longer as used in a standard snap connection. This results in a shaky connector housing in assembled state. That is no problem while handling in production process because the two housing parts are still hold together. When hold together while injection molding, the longer arm keeps the first surface in a distance from the second surface defining a channel. Alternative connecting methods as screwing or welding can be used to connect the first housing part and the second housing part.

### Description of the preferred embodiments

In the following, the invention is described exemplarily with reference to the enclosed figures, in which
- Fig. 1: shows a perspective, view of an interface portion of a sealed electrical wire harness;
- Fig. 2: shows a perspective view of a connector position assurance holder portion of a sealed electrical wire harness;
- Fig. 3: shows a perspective view of a first housing part of the sealed electrical wire harness;
- Fig. 4: shows a perspective view of a flexible sealing member of the sealed electrical wire harness;
- Fig. 5: shows a top view of the sealed electrical wire harness to indicate the cut lines of figures 6 -10;
- Fig. 6: shows a cut view of the sealed electrical wire harness along cutline E-E;
- Fig. 7: shows in an enlarged view details of figure 6;
- Fig. 8: shows a cut view of the sealed electrical wire harness along cut line C-C;
- Fig. 9: shows a cut view of an inlet portion of the sealed electrical wire harness along cut line C-C;
- Fig. 10: shows a cut view of an inlet portion of the sealed electrical wire harness along cutline D-D;

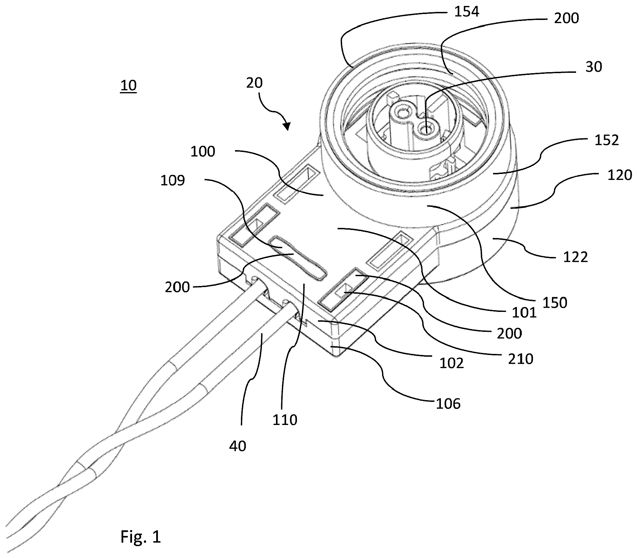

Figure 1 shows a perspective view of an interface portion 150 of a sealed electrical wire harness 10 for connecting safety devices in vehicles, comprising an electrical connector 20, comprising a connector housing 100, having a wire inlet portion 110, a connector position assurance (CPA) holder portion 120 and an interface portion 150. The interface portion 150 comprises a sleeve shaped interface shroud 152 extending from the connector housing 100, wherein a part of the flexible sealing member 200 is arranged on an interface inner surface 154 of the sleeve shaped interface shroud 152. At least one electrical terminal 30 is located and electrically connected to an electrical wire 40 inside an internal cavity 140 that is located central inside the connector housing 100. The connector housing 100 comprises at least one opening 109 connecting the at least one channel 160 to outside, wherein a part of the flexible sealing member 200 is present in the opening and flush with the housing outer surface 101 of the connector housing 100. The flexible sealing member 200 that is present in the opening comprises an indentation 210, wherein the indentation 210 extends inwards the connector housing 100.

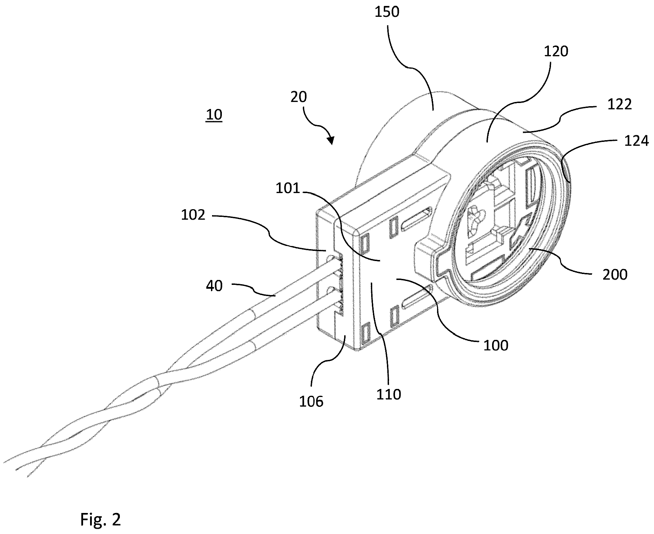

Figure 2 shows a perspective view of a connector position assurance holder portion 120 of the sealed electrical wire harness 10. The connector position assurance holder portion 120 comprises a sleeve shaped connector position assurance holder shroud 122 extending from the connector housing 100, wherein a part of the flexible sealing member 200 is arranged on an inner connector position assurance holder surface 124 of the sleeve shaped connector position assurance holder shroud 122.

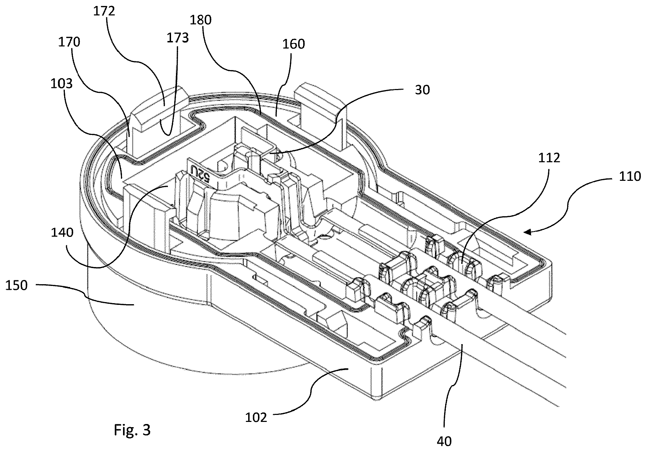

Figure 3 shows a perspective view of a first housing part 102 of the sealed electrical wire harness 10. The at least one electrical terminal 30 is located and electrically connected to an electrical wire 40 inside an internal cavity 140 that is located central inside the connector housing 100. The internal cavity 140 extends into the interface portion 150. The electrical wire 40 extends to outside the connector housing 100 passing the wire inlet portion 110, that is located between the internal cavity 140 and the outside of the connector housing 100. The wire inlet portion 110 comprises an inlet cavity 112 located inside the connector housing 100. The connector housing 100 comprises at least one channel 160 that connects the interface portion 150, the connector position assurance holder portion 120 and the wire inlet portion 110. The at least one wall 180 defining a part of the internal cavity 140 and the at least one wall 180 defining a part of the channel 160.

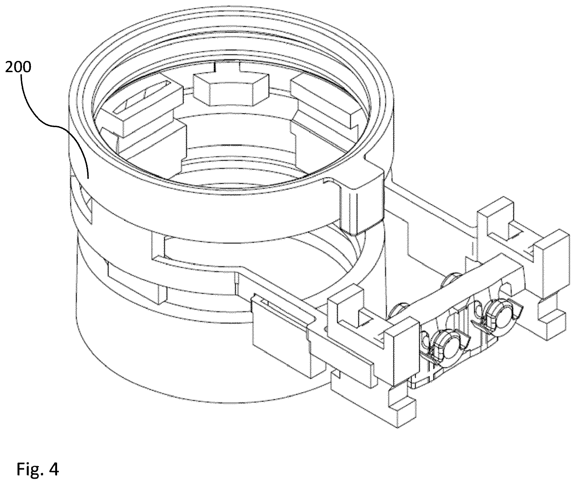

Figure 4 shows a perspective view of a flexible sealing member 200 of the sealed electrical wire harness 10. The flexible sealing member 200 is made of silicone or materials comprising silicone.

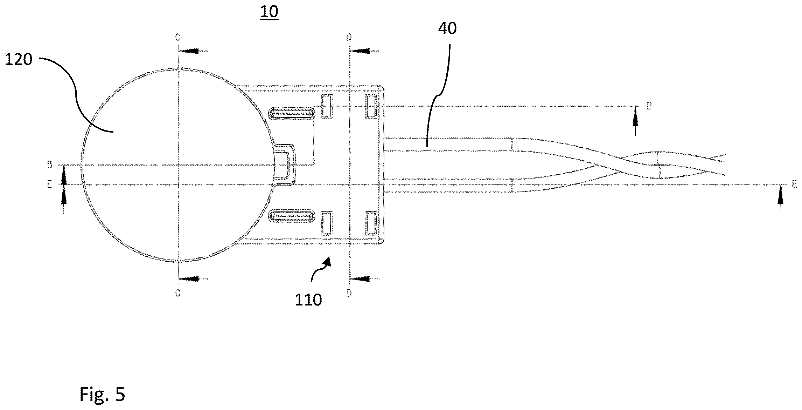

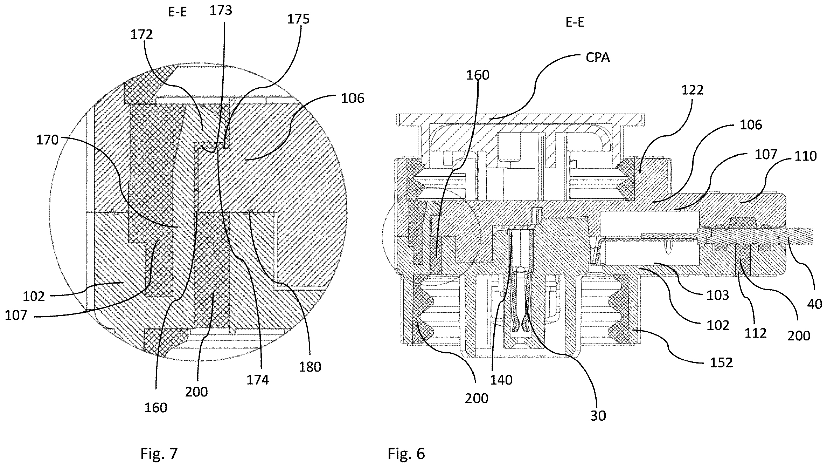

Figure 5 shows a top view of the sealed electrical wire harness to indicate the cut lines of figures 6-10. The view shows the connector position assurance holder portion 120 of the sealed electrical wire harness 10.

Figure 6 shows a cut, view of the of the sealed electrical wire harness 10 along cutline E-E. The flexible sealing member 200, is adapted to seal the internal cavity 140, when the electrical connector 20 is electrically connected to a counter connector and when a connector position assurance device is activated in the connector position assurance holder portion 120 to mechanically lock of the electrical connector 20 to the counter connector. The wire inlet portion 110 comprises an inlet cavity 112 located inside the connector housing 100, wherein a part of the flexible sealing member 200 fills the inlet cavity 112, thereby sealingly surrounding a portion of the electrical wire 40 passing the inlet cavity 112. The connector housing 100 comprises a first housing part 102 and a second housing part 106. The first housing part 102 comprises at least one wall 180 extending perpendicular from a first inner surface 103 towards a second inner surface 107 of the second housing part 106, thereby touching the second inner surface 107, wherein the wall 180 furthermore extends between the first inner surface 103 and the second inner surface 107, thereby defining separate spaces inside the connector housing 100. The flexible sealing member 200 is made in one piece. A part of the flexible sealing member 200 extend through the at least one channel 160.

Figure 7 shows an enlarged view details of figure 6. The first housing part 102 has at least one arm 170 with a hook shaped end 172, comprising a first surface 173 facing towards the first housing part 102. The second housing part 106 has at least one edge 174 comprising a second surface 175 facing the second housing part 102. The first surface 173 is arranged opposite the second surface 175 when the first housing part 102 and a second housing part 106 are in an assembled state. A part of the flexible sealing member 200 is arranged in between the first surface 173 and the second surface 175. A part of the at least one channel 160 is defined by the first surface 173 and the second surface 175.

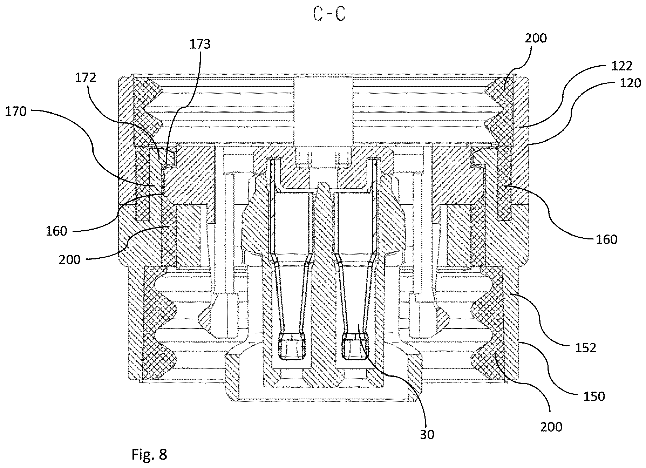

Figure 8 shows a cut view of the sealed electrical wire harness 10 along cut line C-C. The connector housing 100 comprises at least one channel 160 that connects the interface portion 150, the connector position assurance holder portion 120 and the wire inlet portion 110. A part of the flexible sealing member 200 extend through the at least one channel 160.

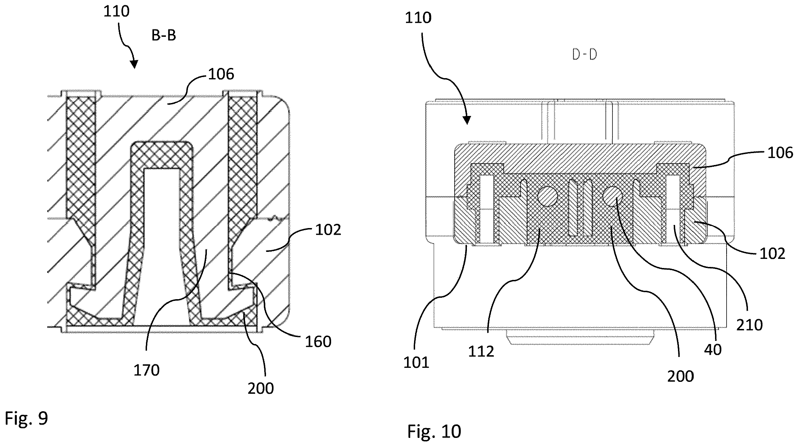

Figure 9 shows a cut view of an inlet portion 110 of the sealed electrical wire harness along cut line C-C. The connector housing 100 comprises at least one channel 160 that connects the interface portion 150, the connector position assurance holder portion 120 and the wire inlet portion 110, wherein a part of the flexible sealing member 200 extend through the at least one channel 160. The second housing part 106 has at least one arm 170 with a hook shaped end 172, comprising a first surface 173 facing towards the second housing part 106. The first housing part 102 has at least one edge 174 comprising a second surface 175 facing the first housing part 102. The first surface 173 is arranged opposite the second surface 175 when the first housing part 102 and a first housing part 102 are in an assembled state. A part of the flexible sealing member 200 is arranged in between the first surface 173 and the second surface 175. A part of the at least one channel 160 is defined by the first surface 173 and the second surface 175.

Figure 10 shows a cut view of the inlet portion 110 of the sealed electrical wire harness along cutline D-D. The wire inlet portion 110 comprises an inlet cavity 112 located inside the connector housing 100. A part of the flexible sealing member 200 fills the inlet cavity 112, thereby sealingly surrounding a portion of the electrical wire 40 passing the inlet cavity 112. The connector housing 100 comprises a first housing part 102 and a second housing part 106.

## Claims

1. Sealed electrical wire harness (10) for connecting safety devices in vehicles, comprising an electrical connector (20), comprising a connector housing (100) comprising an opening (109) and having a wire inlet portion (110), a connector position assurance (CPA) holder portion (120) and a interface portion (150), wherein at least one electrical terminal (30) is located and electrically connected to an electrical wire (40) inside an internal cavity (140) that is located central inside the connector housing (100), wherein the internal cavity (140) extends into the interface portion (150), the electrical wire (40) extends to outside the connector housing (100) passing the wire inlet portion (110), that is located between the internal cavity (140) and the outside of the connector housing (100), a flexible sealing member (200), adapted to seal the internal cavity (140), when the electrical connector (20) is electrically connected to a counter connector and when a connector position assurance device is activated in the connector position assurance holder portion (120) to mechanically lock the electrical connector (20) to the counter connector,
**characterized in that**
the flexible sealing member (200) is made in one piece,
wherein the interface portion (150) comprises a sleeve shaped interface shroud (152) extending from the connector housing (100), wherein a part of the flexible sealing member (200) is arranged on an interface inner surface (154) of the sleeve shaped interface shroud (152),
wherein the connector position assurance holder portion (120) comprises a sleeve shaped connector position assurance holder shroud (122) extending from the connector housing (100), wherein a part of the flexible sealing member (200) is arranged on an inner connector position assurance holder surface (124) of the sleeve shaped connector position assurance holder shroud (122),
wherein the wire inlet portion (110) comprises an inlet cavity (112) located inside the connector housing (100), wherein a part of the flexible sealing member (200) fills the inlet cavity (112), thereby sealingly surrounding a portion of the electrical wire (40) passing the inlet cavity (112),
wherein the connector housing (100) comprises at least one channel (160) that connects the interface portion (150), the connector position assurance holder portion (120) and the wire inlet portion (110), wherein a part of the flexible sealing member (200) extend through the at least one channel (160),
wherein the connector housing (100) comprises a first housing part (102) and a second housing part (106), wherein the first housing part (102) has at least one arm (170) with an hook shaped end (172), comprising a first surface (173) facing towards the first housing part (102) and wherein the second housing part (106) has at least one edge (174) comprising a second surface (175) facing the second housing part (102), wherein the first surface (173) is arranged opposite the second surface (175) when the first housing part (102) and the second housing part (106) are assembled, wherein a part of the flexible sealing member (200) is arranged in between the first surface (173) and the second surface (175).

2. Sealed electrical wire harness (10) according to claim 1, wherein the flexible sealing member (200) is made of silicone or materials comprising silicone.

3. Sealed electrical wire harness (10) according to claim 1 or 2, wherein a part of the at least one channel (160) is defined by the first surface (173) and the second surface (175).

4. Sealed electrical wire harness (10) according to any of claims 1 to 3, wherein the first housing part (102) comprises at least one wall (180) extending perpendicular from a first inner surface (103) towards a second inner surface (107) of the second housing part (106), thereby touching the second inner surface (107), wherein the wall (180) furthermore extends between the first inner surface (103) and the second inner surface (107), thereby defining separate spaces inside the connector housing (100).

5. Sealed electrical wire harness (10) according to the preceding claim, wherein the at least one wall (180) defining a part of the internal cavity (140).

6. Sealed electrical wire harness (10) according to claim 1 or 2 or any of claims 4 or 5, wherein the at least one wall (180) defining a part of the channel (160).

7. Sealed electrical wire harness (10) according to any of claims 1 to 6, wherein said opening (109) connects the at least one channel (160) to outside, wherein a part of the flexible sealing member (200) is present in the opening and flush with a housing outer surface (101) of the connector housing (100).

8. Sealed electrical wire harness (10) according to the preceding claim, wherein the flexible sealing member (200) that is present in the opening comprises an indentation (210), wherein the indentation (210) extends inwards the connector housing (100).

9. Sealed electrical wire harness (10) according to any preceding claim, wherein the first housing part (102) and the second housing part (106) are adapted to define the connector housing (100), wherein the hook shaped end (172) is adapted to keep the first surface (173) spaced apart from the second surface (175) when the first housing part (102) and the second housing part (106) are hold against each other.

10. Method to manufacture a sealed electrical wire harness (10) according to any of claims 1 to 9 comprising the steps:
a) providing a sealed electrical wire harness (10) for connecting safety devices in vehicles according to claim 1, comprising an electrical connector (20), comprising a connector housing (100) comprising an opening and having a wire inlet portion (110), a connector position assurance (CPA) holder portion (120) and a interface portion (150), wherein at least one electrical terminal (30) is located and electrically connected to an electrical wire (40) inside an internal cavity (140) that is located central inside the connector housing (100), wherein the internal cavity (140) extends into the interface portion (150), the electrical wire (40) extends to outside the connector housing (100) passing the wire inlet portion (110), that is located between the internal cavity (140) and the outside of the connector housing (100), a flexible sealing member (200), adapted to seal the internal cavity (140), when the electrical connector (20) is electrically connected to a counter connector and when a connector position assurance device is activated in the connector position assurance holder portion (120) to mechanically lock the electrical connector (20) to the counter connector,
**characterized in that**
the flexible sealing member (200) is made in one piece,
wherein the interface portion (150) comprises a sleeve shaped interface shroud (152) extending from the connector housing (100), wherein a part of the flexible sealing member (200) is arranged on an interface inner surface (154) of the sleeve shaped interface shroud (152),
wherein the connector position assurance holder portion (120) comprises a sleeve shaped connector position assurance holder shroud (122) extending from the connector housing (100), wherein a part of the flexible sealing member (200) is arranged on an inner connector position assurance holder surface (124) of the sleeve shaped connector position assurance holder shroud (122),
wherein the wire inlet portion (110) comprises an inlet cavity (112) located inside the connector housing (100), wherein a part of the flexible sealing member (200) fills the inlet cavity (112), thereby sealingly surrounding a portion of the electrical wire (40) passing the inlet cavity (112),
wherein the connector housing (100) comprises at least one channel (160) that connects the interface portion (150), the connector position assurance holder portion (120) and the wire inlet portion (110), wherein a part of the flexible sealing member (200) extend through the at least one channel (160),
wherein the connector housing (100) comprises a first housing part (102) and a second housing part (106), wherein the first housing part (102) has at least one arm (170) with an hook shaped end (172), comprising a first surface (173) facing towards the first housing part (102) and wherein the second housing part (106) has at least one edge (174) comprising a second surface (175) facing the second housing part (102), wherein the first surface (173) is arranged opposite the second surface (175) when the first housing part (102) and the second housing part (106) are assembled, wherein a part of the flexible sealing member (200) is arranged in between the first surface (173) and the second surface (175);
b) inserting the connector housing (100) into the injecting molding tool;
c) closing the injecting molding tool thereby covering the connector housing (100) tightly, whereby the heating protrusion protrudes inside the connector housing (100);
d) filling the sealing material into the connector housing, thereby distributing the sealing material inside the connector housing, to the wire inlet portion (110), connector position assurance holder portion (120) and the interface portion (150), whereby the heating protrusion is flowed by the sealing material;
e) Removing the sealed electrical wire harness (10) from the injecting molding tool.

## Patentansprüche

1. Abgedichteter elektrischer Kabelbaum (10) zum Verbinden von Sicherheitsvorrichtungen in Fahrzeugen, umfassend einen elektrischen Verbinder (20), umfassend ein Verbindergehäuse (100) umfassend eine Öffnung (109) und aufweisend einen Drahteinlassabschnitt (110), einen Verbinderpositionssicherungs-(CPA)-Halterabschnitt (120) und einen Schnittstellenabschnitt (150), wobei sich mindestens ein elektrischer Anschluss (30) innerhalb eines inneren Hohlraums (140), der sich zentral innerhalb des Verbindergehäuses (100) befindet, befindet und elektrisch mit einem elektrischen Draht (40) verbunden ist, wobei sich der innere Hohlraum (140) in den Schnittstellenabschnitt (150) erstreckt, der elektrische Draht (40) sich nach außerhalb des Verbindergehäuses (100) erstreckt und den Drahteinlassabschnitt (110) passiert, der sich zwischen dem inneren Hohlraum (140) und der Außenseite des Verbindergehäuses (100) befindet, ein flexibles Dichtungselement (200), das angepasst ist, um den inneren Hohlraum (140) abzudichten, wenn der elektrische Verbinder (20) elektrisch mit einem Gegenverbinder verbunden ist und wenn ein Verbinderpositionssicherungs-Gerät in dem Verbinderpositionssicherungs-Halterabschnitt (120) aktiviert wird, um den elektrischen Verbinder (20) mechanisch mit dem Gegenverbinder zu verriegeln,
**dadurch gekennzeichnet, dass**
das flexible Dichtungselement (200) einstückig hergestellt wird,
wobei der Schnittstellenabschnitt (150) eine hülsenförmige Schnittstellenabdeckung (152) umfasst, die sich von dem Verbindergehäuse (100) erstreckt, wobei ein Teil des flexiblen Dichtungselements (200) an einer Schnittstelleninnenfläche (154) der hülsenförmigen Schnittstellenabdeckung (152) angeordnet ist,
wobei der Verbinderpositionssicherungs-Halterabschnitt (120) eine Verbinderpositionssicherung-Halterabdeckung (122) umfasst, die sich von dem Verbindergehäuse (100) erstreckt, wobei ein Teil des flexiblen Dichtungselements (200) auf einer inneren Verbinderpositionssicherung-Halteroberfläche (124) der hülsenförmigen Verbinderpositionssicherungs-Halterabdeckung (122) angeordnet ist,
wobei der Drahteinlassabschnitt (110) einen Einlasshohlraum (112) umfasst, der sich innerhalb des Verbindergehäuses (100) befindet, wobei ein Teil des flexiblen Dichtungselements (200) den Einlasshohlraum (112) füllt, wodurch er einen den Abschnitt des elektrischen Drahts (40), der den Einlasshohlraum (112) passiert, abdichtend umgibt,
wobei das Verbindergehäuse (100) mindestens einen Kanal (160) umfasst, der den Schnittstellenabschnitt (150), den Verbinderpositionssicherungs-Halterabschnitt (120) und den Drahteinlassabschnitt (110) verbindet, wobei sich ein Teil des flexiblen Dichtungselements (200) durch den mindestens einen Kanal (160) erstreckt,
wobei das Verbindergehäuse (100) ein erstes Gehäuseteil (102) und ein zweites Gehäuseteil (106) umfasst, wobei der erste Gehäuseteil (102) mindestens einen Arm (170) mit einem hakenförmigen Ende (172) aufweist, umfassend eine erste Oberfläche (173), die dem ersten Gehäuseteil (102) zugewandt ist, und wobei der zweite Gehäuseteil (106) mindestens eine Kante (174) umfassend eine zweite Oberfläche (175) aufweist, die dem zweiten Gehäuseteil (102) zugewandt ist, wobei die erste Oberfläche (173) gegenüber der zweiten Oberfläche (175) angeordnet ist, wenn der erste Gehäuseteil (102) und der zweite Gehäuseteil (106) zusammengebaut sind, wobei ein Teil des flexiblen Dichtungselements (200) zwischen der ersten Oberfläche (173) und der zweiten Oberfläche (175) angeordnet ist.

2. Abgedichteter elektrischer Kabelbaum (10) gemäß Anspruch 1, wobei das flexible Dichtungselement (200) aus Silikon oder Silikon umfassenden Materialien hergestellt ist.

3. Abgedichteter elektrischer Kabelbaum (10) gemäß Anspruch 1 oder 2, wobei ein Teil des mindestens einen Kanals (160) durch die erste Oberfläche (173) und die zweite Oberfläche (175) definiert ist.

4. Abgedichteter elektrischer Kabelbaum (10) gemäß einem der Ansprüche 1 bis 3, wobei der erste Gehäuseteil (102) mindestens eine Wand (180) umfasst, die sich senkrecht von einer ersten Innenfläche (103) zu einer zweiten Innenfläche (107) des zweiten Gehäuseteils (106) erstreckt, wodurch sie die zweite Innenfläche (107) berührt, wobei sich die Wand (180) außerdem zwischen der ersten Innenfläche (103) und der zweiten Innenfläche (107) erstreckt, wodurch getrennte Räume innerhalb des Verbindergehäuses (100) definiert werden.

5. Abgedichteter elektrischer Kabelbaum (10) gemäß dem vorhergehenden Anspruch, wobei die mindestens eine Wand (180) einen Teil des inneren Hohlraums (140) definiert.

6. Abgedichteter elektrischer Kabelbaum (10) gemäß Anspruch 1 oder 2 oder irgendeinem der Ansprüche 4 oder 5, wobei die mindestens eine Wand (180) einen Teil des Kanals (160) definiert.

7. Abgedichteter elektrischer Kabelbaum (10) gemäß einem der Ansprüche 1 bis 6, wobei die Öffnung (109) den mindestens einen Kanal (160) mit der Außenseite verbindet, wobei ein Teil des flexiblen Dichtungselements (200) in der Öffnung vorhanden ist und mit einer Gehäuseaußenfläche (101) des Verbindergehäuses (100) bündig ist.

8. Abgedichteter elektrischer Kabelbaum (10) gemäß dem vorhergehenden Anspruch, wobei das flexible Dichtungselement (200), das in der Öffnung vorhanden ist, eine Vertiefung (210) umfasst, wobei sich die Vertiefung (210) nach innen in das Verbindergehäuse (100) erstreckt.

9. Abgedichteter elektrischer Kabelbaum (10) nach irgendeinem vorhergehenden Anspruch, wobei der erste Gehäuseteil (102) und der zweite Gehäuseteil (106) dazu angepasst sind, das Verbindergehäuse (100) zu definieren, wobei das hakenförmige Ende (172) dazu angepasst ist, die erste Oberfläche (173) von der zweiten Oberfläche (175) beabstandet zu halten, wenn der erste Gehäuseteil (102) und der zweite Gehäuseteil (106) gegeneinander gehalten werden.

10. Verfahren zum Herstellen eines abgedichteten elektrischen Kabelbaums (10) nach irgendeinem der Ansprüche 1 bis 9 umfassend die Schritte:
a) Bereitstellen eines elektrischen Kabelbaums (10) zum Verbinden von Sicherheitsvorrichtungen in Fahrzeugen gemäß Anspruch 1, umfassend einen elektrischen Verbinder (20), umfassend ein Verbindergehäuse (100) umfassend eine Öffnung und aufweisend einen Drahteinlassabschnitt (110), einen Verbinderpositionssicherungs-(CPA)-Halterabschnitt (120) und einen Schnittstellenabschnitt (150), wobei sich mindestens ein elektrischer Anschluss (30) innerhalb eines inneren Hohlraums (140), der sich zentral innerhalb des Verbindergehäuses (100) befindet, befindet und elektrisch mit einem elektrischen Draht (40) verbunden ist, wobei sich der innere Hohlraum (140) in den Schnittstellenabschnitt (150) erstreckt, der elektrische Draht (40) sich nach außerhalb des Verbindergehäuses (100) erstreckt und den Drahteinlassabschnitt (110) passiert, der sich zwischen dem inneren Hohlraum (140) und der Außenseite des Verbindergehäuses (100) befindet, ein flexibles Dichtungselement (200), das angepasst ist, um den inneren Hohlraum (140) abzudichten, wenn der elektrische Verbinder (20) elektrisch mit einem Gegenverbinder verbunden ist und wenn ein Verbinderpositionssicherungs-Gerät in dem Verbinderpositionssicherungs-Halterabschnitt (120) aktiviert wird, um den elektrischen Verbinder (20) mechanisch mit dem Gegenverbinder zu verriegeln,
**dadurch gekennzeichnet, dass**
das flexible Dichtungselement (200) einstückig hergestellt wird,
wobei der Schnittstellenabschnitt (150) eine hülsenförmige Schnittstellenabdeckung (152) umfasst, die sich von dem Verbindergehäuse (100) erstreckt, wobei ein Teil des flexiblen Dichtungselements (200) an einer Schnittstelleninnenfläche (154) der hülsenförmigen Schnittstellenabdeckung (152) angeordnet ist,
wobei der Verbinderpositionssicherungs-Halterabschnitt (120) eine Verbinderpositionssicherung-Halterabdeckung (122) umfasst, die sich von dem Verbindergehäuse (100) erstreckt, wobei ein Teil des flexiblen Dichtungselements (200) auf einer inneren Verbinderpositionssicherung-Halteroberfläche (124) der hülsenförmigen Verbinderpositionssicherungs-Halterabdeckung (122) angeordnet ist,
wobei der Drahteinlassabschnitt (110) einen Einlasshohlraum (112) umfasst, der sich innerhalb des Verbindergehäuses (100) befindet, wobei ein Teil des flexiblen Dichtungselements (200) den Einlasshohlraum (112) füllt, wodurch er einen Abschnitt des elektrischen Drahts (40), der den Einlassholraum (112) passiert, abdichtend umgibt,
wobei das Verbindergehäuse (100) mindestens einen Kanal (160) umfasst, der den Schnittstellenabschnitt (150), den Verbinderpositionssicherungs-Halterabschnitt (120) und den Drahteinlassabschnitt (110) verbindet, wobei sich ein Teil des flexiblen Dichtungselements (200) durch den mindestens einen Kanal (160) erstreckt,
wobei das Verbindergehäuse (100) ein erstes Gehäuseteil (102) und ein zweites Gehäuseteil (106) umfasst, wobei der erste Gehäuseteil (102) mindestens einen Arm (170) mit einem hakenförmigen Ende (172) aufweist, umfassend eine erste Oberfläche (173), die dem ersten Gehäuseteil (102) zugewandt ist, und wobei der zweite Gehäuseteil (106) mindestens eine Kante (174) umfassend eine zweite Oberfläche (175) aufweist, die dem zweiten Gehäuseteil (102) zugewandt ist, wobei die erste Oberfläche (173) gegenüber der zweiten Oberfläche (175) angeordnet ist, wenn der erste Gehäuseteil (102) und der zweite Gehäuseteil (106) zusammengebaut sind, wobei ein Teil des flexiblen Dichtungselements (200) zwischen der ersten Oberfläche (173) und der zweiten Oberfläche (175) angeordnet ist;
b) Einfügen des Verbindergehäuses (100) in das Spritzgießwerkzeug;
c) Schließen des Spritzgießwerkzeugs, wodurch das Verbindergehäuse (100) dicht abgedeckt wird, womit der Heizvorsprung in das Verbindergehäuse (100) hineinragt;
d) Füllen des Dichtungsmaterials in das Verbindergehäuse, wodurch das Dichtungsmaterial innerhalb des Verbindergehäuses zu dem Drahteinlassabschnitt (110), dem Verbinderpositionssicherungs-Halterabschnitt (120) und dem Schnittstellenabschnitt (150) verteilt wird, womit der Heizvorsprung durch das Dichtungsmaterial umströmt wird.
e) Entfernen des abgedichteten elektrischen Kabelbaums (10) aus dem Spritzgießwerkzeug.

## Revendications

1. Faisceau de fils électriques étanche (10) pour connecter des dispositifs de sécurité dans des véhicules, comprenant un connecteur électrique (20), comprenant un boîtier de connecteur (100) comprenant une ouverture (109) et possédant une partie d'entrée de fils (110), une partie de maintien à garantie de position du connecteur (CPA) (120), et une partie d'interface (150), au moins une borne électrique (30) étant située et électriquement connectée à un fil électrique (40) à l'intérieur d'une cavité interne (140) qui est située centralement à l'intérieur du boîtier de connecteur (100), la cavité interne (140) s'étendant jusque dans la partie d'interface (150), le fil électrique (40) s'étendant vers l'extérieur du boîtier de connecteur (100) au travers de la partie d'entrée de fils (110), qui est située entre la cavité interne (140) et l'extérieur du boîtier de connecteur (100), un organe d'obturation flexible (200), apte à obturer la cavité interne (140), lorsque le connecteur électrique (20) est connecté électriquement à un contre-connecteur et lorsqu'un dispositif à garantie de position du connecteur est activé dans la partie de maintien à garantie de position du connecteur (120) pour verrouiller mécaniquement le connecteur électrique (20) au contre-connecteur,
**caractérisé en ce que**
l'organe d'obturation flexible (200) est réalisé en une seule pièce,
dans lequel la partie d'interface (150) comprend un carénage d'interface en forme de manchon (152) s'étendant à partir du boîtier de connecteur (100), une partie de l'organe d'obturation flexible (200) étant agencée sur une surface interne d'interface (154) du carénage d'interface en forme de manchon (152),
dans lequel la partie de maintien à garantie de position du connecteur (120) comprend un carénage de partie de maintien à garantie de position du connecteur en forme de manchon (122) s'étendant à partir du boîtier de connecteur (100), une partie de l'organe d'obturation flexible (200) étant agencée sur une surface de maintien à garantie de position du connecteur interne (124) du carénage de maintien à garantie de position du connecteur en forme de manchon (122),
dans lequel la partie d'entrée de fils (110) comprend une cavité d'entrée (112) située à l'intérieur du boîtier de connecteur (100), une partie de l'organe d'obturation flexible (200) remplissant la cavité d'entrée (112), de manière à entourer de façon étanche une partie du fil électrique (40) passant par la cavité d'entrée (112),
dans lequel le boîtier de connecteur (100) comprend au moins une gorge (160) qui relie la partie d'interface (150), la partie de maintien à garantie de position du connecteur (120) et la partie d'entrée de fils (110), une partie de l'organe d'obturation flexible (200) s'étendant au travers de l'au moins une gorge (160),
dans lequel le boîtier de connecteur (100) comprend une première partie de boîtier (102) et une seconde partie de boîtier (106), la première partie de boîtier (102) possédant au moins un bras (170) avec une extrémité en forme de crochet (172), comprenant une première surface (173) tournée en direction de la première partie de boîtier (102) et la seconde partie de boîtier (106) possédant au moins un bord (174) comprenant une seconde surface (175) tournée vers la seconde partie de boîtier (102), la première surface (173) étant agencée à l'opposé de la seconde surface (175) lorsque la première partie de boîtier (102) et la seconde partie de boîtier (106) sont assemblées, une partie de l'organe d'obturation flexible (200) étant agencée dans l'intervalle entre la première surface (173) et la seconde surface (175).

2. Faisceau de fils électriques étanche (10) selon la revendication 1, dans lequel l'organe d'obturation flexible (200) est réalisé en silicone ou en matériau comprenant du silicone.

3. Faisceau de fils électriques étanche (10) selon la revendication 1 ou 2, dans lequel une partie de l'au moins une gorge (160) est définie par la première surface (173) et la seconde surface (175).

4. Faisceau de fils électriques étanche (10) selon l'une des revendications 1 à 3, dans lequel la première partie de boîtier (102) comprend au moins une paroi (180) s'étendant perpendiculairement par rapport à une première surface interne (103) en direction d'une seconde surface interne (107) de la seconde partie de boîtier (106), de manière à toucher ainsi la seconde surface interne (107), la paroi (180) s'étendant en outre entre la première surface interne (103) et la seconde surface interne (107), définissant ainsi des volumes distincts à l'intérieur du boîtier de connecteur (100).

5. Faisceau de fils électriques étanche (10) selon la revendication précédente, dans lequel l'au moins une paroi (180) définit une partie de la cavité interne (140).

6. Faisceau de fils électriques étanche (10) selon la revendication 1 ou 2 ou l'une des revendications 4 ou 5, dans lequel l'au moins une paroi (180) définit une partie de la gorge (160).

7. Faisceau de fils électriques étanche (10) selon l'une des revendications 1 à 6, dans lequel ladite ouverture (109) relie l'au moins une gorge (160) avec l'extérieur, une partie de l'organe d'obturation flexible (200) étant présente dans l'ouverture et arrivant au ras d'une surface externe de boîtier (101) du boîtier de connecteur (100).

8. Faisceau de fils électriques étanche (10) selon la revendication précédente, dans lequel l'organe d'obturation flexible (200) qui est présent dans l'ouverture comprend une indentation (210), l'indentation (210) s'étendant vers l'intérieur du boîtier de connecteur (100).

9. Faisceau de fils électriques étanche (10) selon l'une des revendications précédentes, dans lequel la première partie de boîtier (102) et la seconde partie de boîtier (106) sont aptes à définir le boîtier de connecteur (100), l'extrémité en forme de crochet (172) étant apte à maintenir la première surface (173) à distance de la seconde surface (175) lorsque la première partie de boîtier (102) et la seconde partie de boîtier (106) sont maintenues l'une contre l'autre.

10. Procédé de fabrication d'un faisceau de fils électriques étanche (10) selon l'une des revendications 1 à 9, comprenant les étapes suivantes :
(a) l'obtention d'un faisceau de fils électriques étanche (10) pour connecter des dispositifs de sécurité dans des véhicules selon la revendication 1, comprenant un connecteur électrique (20), comprenant un boîtier de connecteur (100) comprenant une ouverture et possédant une partie d'entrée de fils (110), une partie de maintien à garantie de position du connecteur (CPA) (120), et une partie d'interface (150), au moins une borne électrique (30) étant située et électriquement connectée à un fil électrique (40) à l'intérieur d'une cavité interne (140) qui est située centralement à l'intérieur du boîtier de connecteur (100), la cavité interne (140) s'étendant jusque dans la partie d'interface (150), le fil électrique (40) s'étendant vers l'extérieur du boîtier de connecteur (100) au travers de la partie d'entrée de fils (110), qui est située entre la cavité interne (140) et l'extérieur du boîtier de connecteur (100), un organe d'obturation flexible (200), apte à obturer la cavité interne (140), lorsque le connecteur électrique (20) est connecté électriquement à un contre-connecteur et lorsqu'un dispositif à garantie de position du connecteur est activé dans la partie de maintien à garantie de position du connecteur (120) pour verrouiller mécaniquement le connecteur électrique (20) au contre-connecteur,
**caractérisé en ce que**
l'organe d'obturation flexible (200) est réalisé en une seule pièce,
la partie d'interface (150) comprenant un carénage d'interface en forme de manchon (152) s'étendant à partir du boîtier de connecteur (100), une partie de l'organe d'obturation flexible (200) étant agencée sur une surface interne d'interface (154) du carénage d'interface en forme de manchon (152),
la partie de maintien à garantie de position du connecteur (120) comprenant un carénage de partie de maintien à garantie de position du connecteur en forme de manchon (122) s'étendant à partir du boîtier de connecteur (100), une partie de l'organe d'obturation flexible (200) étant agencée sur une surface de maintien à garantie de position du connecteur interne (124) du carénage de maintien à garantie de position du connecteur en forme de manchon (122),
la partie d'entrée de fils (110) comprenant une cavité d'entrée (112) située à l'intérieur du boîtier de connecteur (100), une partie de l'organe d'obturation flexible (200) remplissant la cavité d'entrée (112), de manière à entourer de façon étanche une partie du fil électrique (40) passant par la cavité d'entrée (112),
le boîtier de connecteur (100) comprenant au moins une gorge (160) qui relie la partie d'interface (150), la partie de maintien à garantie de position du connecteur (120) et la partie d'entrée de fils (110), une partie de l'organe d'obturation flexible (200) s'étendant au travers de l'au moins une gorge (160),
le boîtier de connecteur (100) comprenant une première partie de boîtier (102) et une seconde partie de boîtier (106), la première partie de boîtier (102) possédant au moins un bras (170) avec une extrémité en forme de crochet (172), comprenant une première surface (173) tournée en direction de la première partie de boîtier (102) et la seconde partie de boîtier (106) possédant au moins un bord (174) comprenant une seconde surface (175) tournée vers la seconde partie de boîtier (102), la première surface (173) étant agencée à l'opposé de la seconde surface (175) lorsque la première partie de boîtier (102) et la seconde partie de boîtier (106) sont assemblées, une partie de l'organe d'obturation flexible (200) étant agencée dans l'intervalle entre la première surface (173) et la seconde surface (175) ;
(b) l'insertion du boîtier de connecteur (100) dans l'outil de moulage par injection ;
(c) la fermeture de l'outil de moulage par injection de manière à recouvrir ainsi étroitement le boîtier de connecteur (100), de sorte que l'excroissance de chauffage fasse saillie à l'intérieur du boîtier de connecteur (100) ;
(d) le remplissage du matériau d'obturation dans le boîtier de connecteur, en distribuant ainsi le matériau d'obturation à l'intérieur du boîtier de connecteur jusqu'à la partie d'entrée de fils (110), la partie de maintien à garantie de position du connecteur (120), et la partie d'interface (150), de sorte que l'excroissance de chauffage soit noyée dans le matériau d'obturation ; et
(e) le retrait du faisceau de fils électriques étanche (10) de l'outil de moulage par injection.
